# EUROPEAN PATENT APPLICATION

(11) **EP 4 835 590 A1**
(43) Date of publication of application: **04.11.2026**
(21) Application number: 25172881.2
(22) Date of filing: 28.04.2025
(51) Int. Cl.: G05B 19/042, G05B 19/418, G05B 23/02

(54) **METHOD AND SYSTEM FOR REAL-TIME VISUALIZATION OF A TECHNICAL INSTALLATION**

(71) Applicant: Siemens Aktiengesellschaft, 80333 München (DE)
(72) Inventor: Kishora reddy, I, 583103 Bellary, Karnataka (IN); Deepak, Jogi, 521241 Vijayawada, Andhra Pradesh (IN); Harsh, Mapara, 560100 Bengalur Bengaluru, Karnataka (IN); Nitish, Patil, 580030 Hubli, Karnataka (IN); Sibin, Sam, 560100 Bengaluru, Bengaluru (IN)
(74) Representative: Isarpatent

(57) **Abstract**

A computer-implemented method for real-time visualization of a technical installation (114) is disclosed. The field devices (112) collect field data (218) containing operational parameters of assets (102a, 102b) within the installation. A processing unit (202) of a data processing device (108) receives the field data (218), standardized technical configuration data (220) from technical modules linked to the assets (102a, 102b) including integration parameters, and visualization configuration data (222) from a visualization device (110) defining graphical attributes. The processing unit (202) generates mapped data by correlating these datasets for each asset (102a, 102b). The data processing device (108) transmits the mapped data to the visualization device (110), which utilizes a rendering module (302) to produce a digital representation of the technical installation (114). The visualization device (110) displays this representation with dynamically updated operational parameters, enabling continuous real-time monitoring of the assets (102a, 102b).

## Description

The present disclosure relates real-time visualization of a technical installation, and more particularly relates to a method and system for real-time visualization of a technical installation to monitor the operating parameters of assets in the technical installation.

In modern industrial environments, critical process components are often distributed across vast or remote locations, necessitating advanced monitoring and control systems. Human-Machine Interfaces (HMIs) and Module Type Packages (MTPs) have become integral to managing automated systems, enabling operators to interact with Programmable Logic Controllers (PLCs) and Distributed Control Systems (DCS). While MTPs offer modularity and plug-and-play capabilities, their integration with DCS and HMIs introduces significant challenges, particularly in scenarios requiring real-time decision-making and remote accessibility.

A core limitation of current systems is their heavy reliance on DCS infrastructure. Equipment status visualization and operational data are typically accessible only through DCS-dependent process displays, which require localized operator stations or project downloads. This creates inefficiencies for maintenance personnel, who often rely on verbal communication (e.g., phone calls) to gather data when equipment is geographically distant from control rooms. Furthermore, during DCS-PLC connectivity failures, HMIs become non-functional, leaving onsite personnel without real-time insights into process states, compromising both safety and operational continuity.

Current augmented reality (AR) and virtual reality (VR) solutions partially address these gaps by visualizing equipment states. However, these systems often require manual scanning of QR codes or barcodes to retrieve data, which remains tethered to DCS or cloud platforms. This approach fails in connectivity-limited environments and does not provide holistic views of adjacent equipment, forcing personnel to assess devices individually rather than understanding contextual interactions.

The absence of intuitive, location-aware interfaces exacerbates these challenges. Operators and maintenance teams lack tools to directly map physical equipment to their digital counterparts or access aggregated runtime data from surrounding devices. This gap hinders rapid decision-making, prolonging maintenance cycles and impacting productivity.

In view of the foregoing, there is a clear need for a system and a method that enables real-time visualization of a technical installation such as an industrial environment to monitor the operation parameters of the assets.

The term "technical installation" refers to any industrial system, manufacturing system, or similar undertaking that involves the design, development, implementation, or optimization of technical and engineering solutions to address specific objectives. A technical installation may comprise assets including hardware equipment such as motors, robots, logical controllers, human machine interfaces, conveyor belts, and machine lathes. Further, the technical installation may comprise sensors and other sensory devices configured to measure operational parameters of the processes of the engineering project. As an example, a technical installation may be a cement manufacturing plant, glass manufacturing plant, so on and so forth.

The term "assets" may refer to any device, system, instrument, or machinery manufactured or used in an industry that may be employed for performing an operation. In some cases, assets may also include any devices or instruments deployed or functioning in a non-industrial environment such as buildings. Examples of assets include any machinery in the industrial site or technical installation/facility such as motors, gears, bearings, shafts, switchgear, rotors, circuit breakers, protection devices, remote terminal units, transformers, reactors, disconnectors, gear-drive, gradient coils, magnet, chillers, radio frequency coils, appliances, electronic devices, chillers, pumps, heat exchangers, cooling towers, air compressors, boilers, fluid bed driers, coating machines, carbonation towers etc.

The term "field devices" may refer to the hardware components that directly interact with and control the physical processes in a technical installation. These devices are typically installed in the production area, often in proximity to the machinery or process they are monitoring or controlling. Field devices include sensors, actuators, transmitters, and valves, which measure, transmit, and regulate parameters such as temperature, pressure, flow rate, level, and position. Examples of field devices include pressure transmitters, temperature sensors, flow meters, control valves, and motor starters.

The term "field data" may refer to the information collected from assets operating within a technical installation. This data encompasses measurements, readings, and operational parameters captured in real-time or over a period, such as temperature, pressure, flow rate, vibration, and energy consumption. Examples of field data include pressure readings from a transmitter, temperature measurements from a sensor, flow rates from a meter, vibration data from a motor, and operational status signals from a valve. The field data may also include physical properties of the assets such as location of the asset, asset ID, vendor information or the like.

The term "Standardized technical configuration data" may refer to a structured and uniform set of information that defines the functional aspects of industrial assets. This data is typically organized according to standardized formats, such as those defined in the Module Type Package (MTP), ensuring consistency and interoperability across different systems and devices. Examples of standardized technical configuration data include device-specific information, communication settings, including protocol configurations, input/output configurations, control logic, and data related to integration of the assets in the technical installation.

The term "technical modules" may refer to pre-defined, standardized computer-implemented components that encapsulate the functional and operational characteristics of the assets. These modules, also known as Module Type Packages (MTPs), provide a structured framework for representing the capabilities, configurations, and behaviors of field devices and equipment within an automation system. Examples of technical modules include device-specific configurations, communication protocols, data exchange formats, and integration of the assets in the technical installation, ensuring interoperability and seamless integration of assets within the technical installation.

The term "visualization configuration data" refers to the structured information that defines how operational data from industrial assets is displayed and interacted with on a visualization device. This data may include parameters such as screen layouts, widget configurations, alarm settings, and graphical representations, which collectively determine the user interface and user experience for monitoring and controlling industrial processes.

The term "visualization device" ma refers to a hardware or software component designed to display real-time or historical operational data from industrial assets in a human-readable format. These devices enable operators, engineers, and other personnel to monitor, analyze, and interact with industrial processes, machinery, and systems. Examples of visualization devices include human-machine interface (HMI) screens, supervisory control and data acquisition (SCADA) systems, industrial PCs with visualization software, and mobile devices or tablets running visualization apps. Additionally, technologies such as augmented reality (AR) glasses or virtual reality (VR) headsets also serve as visualization devices, providing immersive and interactive views of industrial data. These devices typically present information through graphical user interfaces (GUIs), dashboards, charts, gauges, and alarms, facilitating efficient process monitoring, troubleshooting, and control.

It is an object of the present invention to provide a method for real-time visualization of a technical installation.

The method comprises obtaining, by a plurality of field devices, field data associated with a plurality of assets of the technical installation, wherein the field data includes at least operational parameters of the assets.

The method comprises receiving, by a processing unit of a data processing device, the field data obtained by the field devices, which relates to at least the operational parameters of the assets.

The method comprises, receiving, by the processing unit, standardized technical configuration data of the assets from technical modules corresponding to the assets, wherein the standardized technical configuration data comprises at least the data related to integration of the assets in the technical installation.

In an embodiment, the technical modules may comprise standardized technical configuration of the assets, including communication protocols, communication interfaces, asset type, and runtime interfaces.

The method comprises receiving visualization configuration data of the assets from a visualization device, wherein the visualization configuration data relates to at least the graphical rendering attributes of the assets.

The method comprises generating, by the processing unit, mapped data by correlating the field data, the standardized technical configuration data, and the visualization data for each asset. This mapped data uniquely associates the operational parameters, technical configurations, and graphical rendering attributes for each asset.

The step of generating mapped data further comprises identifying, by the processing unit, the technical module corresponding to each asset from a library of technical modules. In an embodiment, the technical module corresponding to each asset may be identified from a library of technical modules based on a unique identifier in the field data representing the technical module associated with the asset.

The step comprises identifying, by the processing unit, the visualization configuration data corresponding to the asset based on the technical configuration of the asset. The step further comprises correlating, by the processing unit, the operational parameters, technical configuration data, and visualization configuration data for each asset. The step comprises generating, by the processing unit, the final mapped data for each asset based on the correlated field data, technical configuration data, and visualization configuration data.

The method comprises, transmitting, by the data processing device, the mapped data to the visualization device configured to render and display a digital representation of the technical installation.

The method comprises rendering, by the visualization device using a rendering module, the digital representation of the technical installation based on the mapped data. This digital representation is a digital layout of the technical installation with the assets.

The step of rendering the digital representation of the technical installation further comprises capturing, by the visualization device, an image of one or more assets of the technical installation. Further, the step comprises identifying one or more assets within the captured image using an AI model and an object identification module. The step comprises, retrieving, by the visualization device, Human Machine Interface (HMI) facets corresponding to the identified assets from the mapped data received from the data processing device, wherein the HMI facets include graphical attributes and operational parameters associated with each identified device. The step comprises dynamically rendering widgets corresponding to the identified assets on top of the captured image and displays the augmented image with the rendered widgets, wherein the widgets display real-time operational parameters of the assets.

The method comprises visualizing, using the visualization device, real-time operation and operational parameters of the assets within the digital representation of the technical installation, wherein the operational parameters are dynamically reflected in the visualization to enable continuous monitoring of the technical installation.

The method may also comprise receiving, by the data processing device, the modified operational parameter input from the user through the visualization device. The method comprises transmitting, by the data processing device, modified operational parameter to a controller associated with the corresponding asset. The method comprises changing, by the controller, the operational state of the asset based on the modified operational parameter received from the data processing device. The method comprises, displaying, in the visualization device, the updated operational parameter dynamically within the digital representation of the technical installation to provide real-time feedback to the user.

In a further embodiment, the method comprises determining, by the visualization device, the coordinates of the visualization device and identifying all assets within the visible area of the visualization device. The method comprises retrieving, by the visualization device, the mapped data corresponding to the identified assets from the data processing device and renders the digital representation of the assets within the proximity of the visualization device. The method comprises identifying the widgets corresponding to each of the assets based on the mapped data associated with the asset and displays the operational parameters of the identified assets through widgets, enabling real-time monitoring of assets.

In an embodiment, the data processing device may be configured to store in a database, the data relating to the physical properties of the assets in the technical installation.

The object of the present invention is achieved by a computer-program product, having computer-readable instructions stored therein, that when executed by a processing unit, cause the processing unit to perform the above-mentioned method steps.

The object of the present invention is achieved by a computer readable medium on which program code sections of a computer program are saved, the program code sections being loadable into and/or executable in a system to make the system execute the above method steps.

The present invention is further described hereinafter with reference to illustrated embodiments shown in the accompanying drawings, in which:
- FIG 1: illustrates a system for real-time visualization of a technical installation, in accordance with an embodiment of the present invention;
- FIG 2: illustrates an architecture of a data processing device, in accordance with an embodiment of the present invention;
- FIG 3: illustrates an architecture of a visualization device, in accordance with an embodiment of the present invention;
- FIG 4: is a flowchart of a method for real-time visualization of a technical installation, in accordance with an embodiment of the present invention;
- FIG 5: illustrates a flowchart of step of rendering the digital representation of the technical installation, in accordance with an embodiment of the present invention;
- FIG 6: illustrates a flowchart step of generating mapped data, in accordance with an embodiment of the present invention;
- FIG 7: illustrates a flowchart of a method of using location data for real-time visualization of the technical installation, in accordance with an embodiment of the present invention;
- FIG 8: illustrates a flowchart of a method of changing the operational state of an asset using visualization device, in accordance with an embodiment of the present invention; and
- FIG 9: illustrates a digital representation of the technical installation for real-time visualization of operational parameters of the assets, in accordance with an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

Further, skilled artisans will appreciate that elements in the drawings are illustrated for simplicity and may not have necessarily been drawn to scale. For example, the flow charts illustrate the method in terms of the most prominent steps involved to help improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having the benefit of the description herein.

For the purpose of promoting an understanding of the principles of the invention, reference will now be made to the various embodiments and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are explanatory of the invention and are not intended to be restrictive thereof.

Reference throughout this specification to "an aspect", "another aspect" or similar language means that a particular feature, structure, or characteristic described in connection with the embodiment is included in at least one embodiment of the present invention. Thus, appearances of the phrase "in an embodiment", "in another embodiment" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

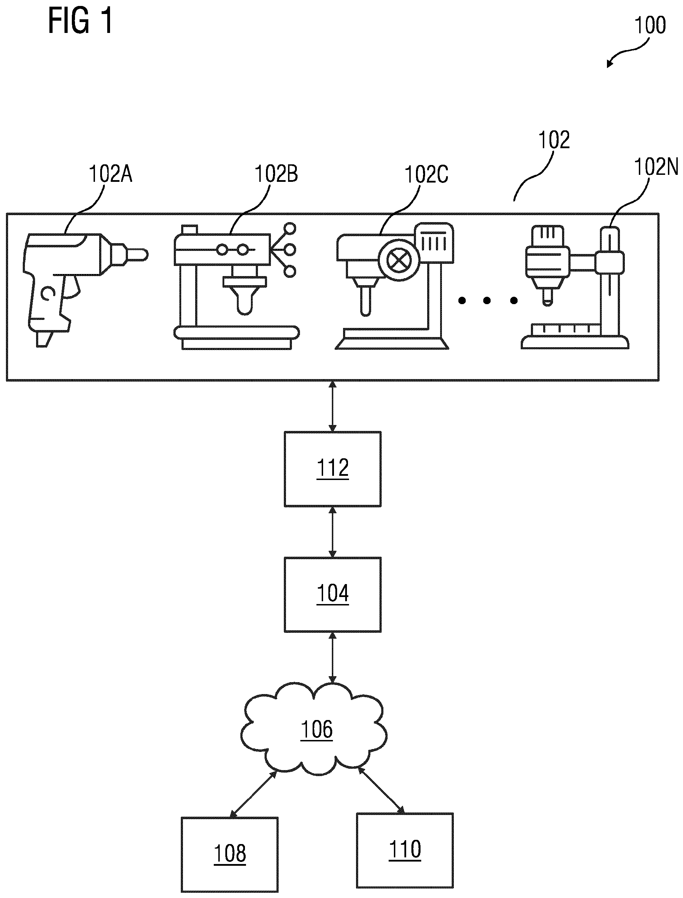

FIG. 1 illustrates a system 100 for real-time visualization of a technical installation 114, in accordance with an embodiment of the present invention. The system 100 comprises a technical installation 114 comprising a plurality of assets (102a-n), one or more field devices 112, one or more controller 104s, a communication network 106, a data processing device 108, and a visualization device 110.

As an example, the technical installation 114 may refer to an industrial system, manufacturing system, or similar undertaking. The assets (102a-n) of the technical installation 114 may include any device, system, instrument, or machinery used in the technical installation 114 that may be employed for performing an operation.

The one or more field devices 112 may include sensors such as temperature sensor, pressure sensor that may be configured to measure operational parameters of the assets (102a-n) of the technical installation 114.

The one or more controllers 104 may include a device configured to control and adjust the operational parameters of the assets (102a-n) of the technical installation 114. As an example, the controller 104 may be a Programmable Logic Controller 104 (PLC) configured to receive operational parameters of the assets (102a-n) from the sensors and accordingly control the operations of the assets (102a-n) based on a predetermined logic.

The data processing device 108 is configured to capture, store, manipulate, and analyze data to enable real-time visualization of the technical installation 114. These devices utilize hardware and software components to process raw data, perform calculations, execute algorithms, and manage tasks. Examples of data processing device 108s include computers, laptops, servers, and other specialized equipment.

The data processing device 108 is configured to receive field data from the field devices 112 such as sensors. The field data may include at least the operational parameters of the assets (102a-n) of the technical installation 114. Further, the data processing device 108 may receive standardized technical configuration data of the assets (102a-n) from technical modules corresponding to the assets (102a-n), and the visualization configuration data of the assets (102a-n) from a visualization device 110.

The data processing device 108 may process the received data to generate mapped data by correlating the field data, the standardized technical configuration data, and the visualization data for each asset (102a-n). This mapping of data is a crucial step in enabling real-time visualization of the technical installation 114.

The visualization device 110 may be a (HMI) screen, AR device, or VR device configured to enable visualization of the technical installation 114. The visualization device 110 may receive the mapped data from the data processing device 108 and may render the digital representation of the technical installation 114. The visualization device 110 may render digital representation of the assets (102a-n) of the technical installation 114 and may display 310 the data associated with assets (102a-n) in the display 310. The data that is displayed may include at least the instantaneous operational parameters of the assets (102a-n).

The communication network 106 is configured to enable communication between the assets (102a-n), the data processing device 108, and the visualization device 110.

The communication network 106 may include, but are not limited to, any one or more different types of networks such as, for example, cable networks, public networks (e.g., the Internet), private networks (e.g., frame-relay networks), wireless networks, cellular networks, telephone networks (e.g., a public switched telephone network), cloud based networks, or any other suitable private or public packet switched or circuit switched networks. Such network(s) may have any suitable communication range associated therewith and may include, for example, global networks (e.g., the Internet), metropolitan area networks (MANs), wide area networks (WANs), local area networks (LANs), or personal area networks (PANs).

Thus, the system enables real-time visualization of the assets (102a-n) of the technical installation 114 using the visualization device 110.

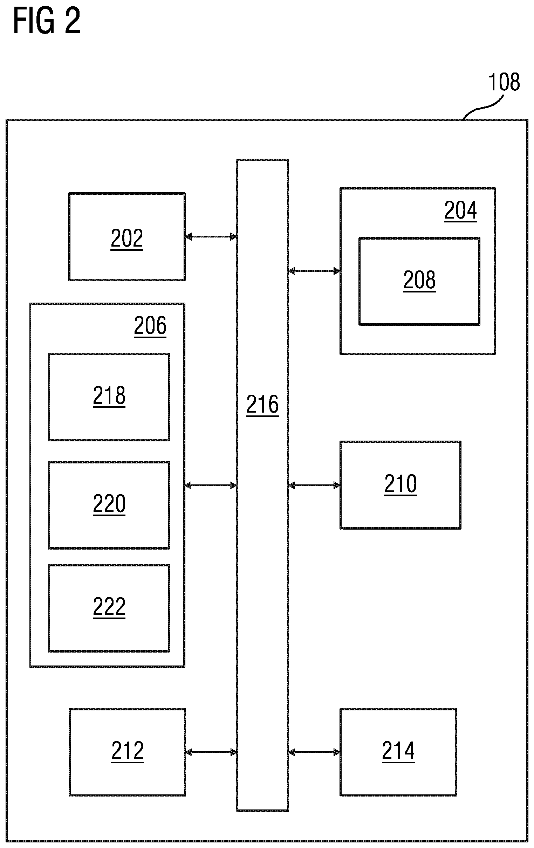

FIG. 2 illustrates an architecture of a data processing device 108, in accordance with an embodiment of the present invention. The data processing device 108 comprises a processing unit 202, a memory 204, a database 206, a network interface 210, an input unit 212, an output unit 214, and a bus 216.

The memory 204 may include volatile memory (memory that maintains its state when supplied with power) such as random access memory (RAM) and/or non-volatile memory (memory that maintains its state even when not supplied with power) such as read-only memory (ROM), flash memory, ferroelectric RAM (FRAM), and so forth. Persistent data storage, as that term is used herein, may include non-volatile memory. In certain example embodiments, volatile memory may enable faster read/write access than non-volatile memory. However, in certain other example embodiments, certain types of non-volatile memory (e.g., FRAM) may enable faster read/write access than certain types of volatile memory. In certain example, the database may be equivalent to the memory. In various implementations, the memory may include multiple different types of memory such as various types of static random access memory (SRAM), various types of dynamic random access memory (DRAM), various types of unalterable ROM, and/or writeable variants of ROM such as electrically erasable programmable read-only memory (EEPROM), flash memory, and so forth. The memory may include main memory as well as various forms of cache memory such as instruction cache(s), data cache(s), translation lookaside buffer(s) (TLBs), and so forth. Further, cache memory such as a data cache may be a multi-level cache organized as a hierarchy of one or more cache levels (L1, L2, etc.).

The memory 204 may include a module 206 stored in the form of machine-readable instructions executable by the one or more processing unit 202. The memory may include multiple modules, wherein the modules, when executed, may enable real-time visualization of the technical installation 114. The modules may enable generating mapped data by correlating the field data 218, standardized technical configuration data 220, and visualization configuration data 222.

The database 206 may include removable storage and/or non-removable storage including, but not limited to, magnetic storage, optical disk storage, and/or tape storage. The database may provide non-volatile storage of computer-executable instructions and other data.

The database 206 may store computer-executable code, instructions, or the like that may be loadable into the memory and executable by the processing unit 202 to cause the processing unit 202 to perform or initiate various operations such as generating mapped data to enable real-time visualization of the technical installation 114. The database may store relevant data that may be copied to memory for use by the processing unit 202 during the execution of the computer-executable instructions. Moreover, output data generated as a result of execution of the computer-executable instructions by the processing unit 202 may be stored initially in memory and may ultimately be copied to the database for non-volatile storage.

More specifically, the database 206 is configured to access the memory 204; and one or more program module, applications, engines, managers, computer-executable code, scripts, or the like such as, for example, the various modules of the memory. Any of the components depicted as being stored in the database may include any combination of software, firmware, and/or hardware. The software and/or firmware may include computer-executable instructions (e.g., computer-executable program code) that may be loaded into the memory for execution by one or more of the processing unit 202 to perform any of the corresponding operations described earlier.

The database 206 may be configured to store data received by the data processing device 108. The data may include the field data 218 received from the field devices 112, standardized technical configuration data 220 of the assets (102a-n) received from technical modules, and visualization configuration data 222 of the assets (102a-n) from a visualization device 110. The processing unit 202 may retrieve this data from the database and generate the mapped data.

The processing unit 202 is configured to access the memory and execute computer-executable instructions loaded therein. For example, the processing unit 202 may be configured to execute computer-executable instructions of the various program module, applications, engines, managers, or the like to cause or facilitate various operations to be performed in accordance with one or more embodiments of the disclosure. The processing unit 202 may include any suitable processing unit 202 capable of accepting data as input, processing the input data in accordance with stored computer-executable instructions, and generating output data. The processing unit 202 may include any type of suitable processing unit 202 including, but not limited to, a central processing unit 202 302, a microprocessor, a Reduced Instruction Set Computer (RISC) microprocessor, a Complex Instruction Set Computer (CISC) microprocessor, a microcontroller 104, an Application Specific Integrated Circuit (ASIC), a Field-Programmable Gate Array (FPGA), a System-on-a-Chip (SoC), a digital signal processor (DSP), and so forth. Further, the processing unit 202 302 may have any suitable microarchitecture design that includes any number of constituent components such as, for example, registers, multiplexers, arithmetic logic units, cache controller 104s for controlling read/write operations to cache memory, branch predictors, or the like. The microarchitecture design of the processing unit 202 302 may be capable of supporting any of a variety of instruction sets.

The processing unit 202 is configured to receive the field data obtained by the field devices 112, wherein the field data relates to at least the operational parameters of the assets (102a-n), and physical properties of the assets (102a-n). Further, the processing unit 202 receives a standardized technical configuration data of the assets (102a-n) from technical modules corresponding to the assets (102a-n). The standardized technical configuration data comprises at least the data related to integration of the assets (102a-n) in the technical installation 114. Further, the processing unit 202 receives the visualization configuration data of the assets (102a-n) from a visualization device 110. The visualization configuration data relates to at least the graphical rendering attributes of the assets (102a-n).

The processing unit 202 extracts the standardized technical configuration data from the technical modules corresponding to the assets (102a-n) of the technical installation 114.

The processing unit 202 further generates a mapped data by correlating the field data, the standardized technical configuration data, and the visualization data for each asset (102a-n). The mapped data uniquely associates the operational parameters, technical configurations, and graphical rendering attributes for each asset (102a-n).

The input unit 212 and the output unit 214 may facilitate the receipt of input information by the various modules from one or more I/O devices as well as the output of information from the modules to the one or more I/O devices. The I/O devices may include any of a variety of components such as a display 310 or a display 310 screen having a touch surface or a touchscreen; an audio output device for producing sound, such as a speaker; an audio capture device, such as a microphone; an image and/or video capture device, such as a camera; a haptic unit; and so forth. The I/O devices may further include, for example, any number of peripheral devices such as data storage devices, printing devices, and so forth.

The network interface 210 may include communication links and associated networking devices (e.g., link-layer switches, routers, etc.) for transmitting network traffic over any suitable type of medium including, but not limited to, coaxial cable, twisted-pair wire (e.g., twisted-pair copper wire), optical fiber, a hybrid fiber-coaxial (HFC) medium, a microwave medium, a radio frequency communication medium, a satellite communication medium, or any combination thereof.

The bus may include at least one of a system bus, a memory bus, an address bus, or a message bus, and may permit the exchange of information (e.g., data (including computer-executable code), signaling, etc.) between various components of the data processing device 108. The bus may include, without limitation, a memory bus or a memory controller 104, a peripheral bus, an accelerated graphics port, and so forth.

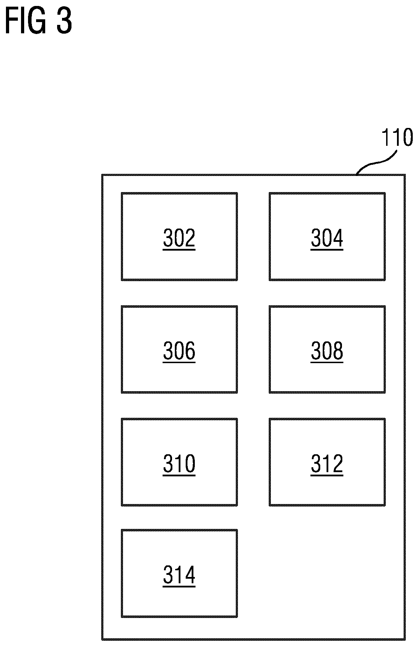

FIG. 3 illustrates an architecture of a visualization device 110, in accordance with an embodiment of the present invention. The visualization device 110 comprises a rendering module 302, a location sensor 304, a widget identifying module 306, a manager service module 308, a display 310, an input module 312, and an output module 314.

The rendering module 302 is configured to generate and display 310 the digital representation of the assets (102a-n) of the technical installation 114 within the device's augmented environment. The rendering module 302 processes the mapped data and renders images and widgets of the assets (102a-n). Further, the rendering module 302 overlays the rendered virtual elements with the user's real-world view. The rendering module 302 may use techniques such as spatial mapping, real-time tracking, and image projection to ensure accurate positioning, scaling, and alignment of virtual assets (102a-n) in the user's field of view.

The location sensor 304 is configured to determine the position, orientation, and coordinates of the visualization device 110 within the technical installation 114. This sensor enables in accurately visualizing assets (102a-n) in the technical installation 114. The location sensor 304 may utilize technologies such as GPS, inertial measurement units (IMUs), accelerometers, gyroscopes, magnetometers, or optical tracking systems to gather spatial data. In some implementations, the location sensor 304 may also leverage external references, such as markers, beacons, or environmental features, to enhance positional accuracy.

The widget identifying module 306 is configured to identify the virtual widgets associated with the assets (102a-n) in the technical installation 114. Widgets are interactive graphical elements, such as icons, buttons, or labels, that represent specific functionalities, data, or controls related to the displayed assets (102a-n). The widget identifying module 306 is configured to identify the widget corresponding to an asset (102a-n) based on the visualization configuration data associated with the asset (102a-n).

The manager service module 308 is configured to coordinate, manage, and control the various services and functionalities required for visualizing assets (102a-n) in the technical installation 114. The manager service module 308 acts as a central controller that orchestrates communication between the modules of the visualization device 110, such as rendering module 302, location sensor 304, and widget identification.

The manager service module 308 receives the mapped data corresponding to an asset (102a-n) to be rendered from the data processing device 108. Further, the manager service module 308 triggers the widget identifying module 306 to identify the widgets corresponding to the assets (102a-n) to be rendered. Further, the manager service module 308 communicates the identified widgets to the rendering module 302 for rendering the assets (102a-n) and widgets and display 310 the virtual assets (102a-n) with the widgets.

The display module 310 is configured to visually present the digital representation of the assets (102a-n) and the technical installation 114 overlaid onto the user's real-world view. The display module 310 includes, but is not limited to, one or more transparent or semi-transparent screens, projection systems, waveguides, or optical assemblies capable of rendering high-resolution images.

The visualization device 110 comprises an input module 312 and an output module 314. The input module 312 may be a camera configured to capture an image or video of the technical installation 114. The output module 314 may be an audio device configured to present the information about the asset (102a-n) in audio format.

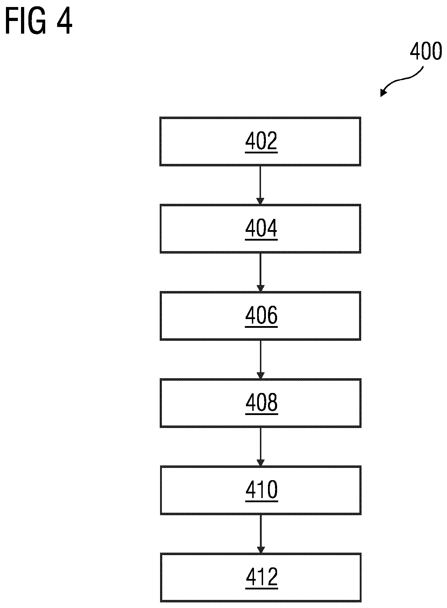

FIG. 4 is a flowchart 400 of a method for real-time visualization of a technical installation 114, in accordance with an embodiment of the present invention. At step 402, a plurality of field devices 112 obtains field data associated with a plurality of assets (102a-n) of the technical installation 114. The field data includes at least operational parameters of the assets (102a-n) such as temperature, and pressure, and the physical properties of the assets (102a-n) such as location of the asset, asset (102a-n) ID, vendor information.

Let us consider a process plant, the reactor vessel is connected with three different input source, wherein each input source is connected to a motor, viz, "Mot 1", "Mot 2", and Mot 3". The motors are configured to pump the input source into the reactor. Each of the motor is provided with their corresponding technical module (MTP file).

In the practical example, field devices connected to assets such as "Mot 1," "Mot 2," and "Mot 3" continuously obtain real-time operational parameters such as motor speed, flow rate, pressure levels, and temperature associated with their operations. These field devices collect data from the reactor system and transmit it for further processing.

At step 404, the processing unit 202 of the data processing device 108 receives data for further processing. The data includes the field data obtained by the field devices 112, a standardized technical configuration data of the assets (102a-n) from technical modules corresponding to the assets (102a-n), and a visualization configuration data of the assets (102a-n) from a visualization device 110.

The processing unit receives standardized technical configuration data provided by the OEMs through MTP files, which detail integration-specific attributes for the plant components. Additionally, visualization configuration data is received, which specifies graphical rendering attributes needed for augmented reality (AR) visualization.

In an embodiment, the standardized technical configuration data comprises at least the data related to integration of the assets (102a-n) in the technical installation 114. The processing unit 202 extracts the standardized technical configuration data from the technical modules corresponding to the assets (102a-n). The technical modules may refer to Module Type Packages (MTP) associated with the assets (102a-n).

The Module Type Packages (MTPs), provide a structured framework for representing the capabilities, configurations, and behaviors of field devices and equipment within an automation system. Examples of technical modules include device-specific configurations, communication protocols, data exchange formats, and integration of the assets in the technical installation, ensuring interoperability and seamless integration of assets within the technical installation.

In an embodiment, the visualization configuration data relates to at least the graphical rendering attributes of the assets (102a-n). The visualization configuration data comprises information related to the widget corresponding to the asset (102a-n) to be rendered.

At step 406, the processing unit 202 generates a mapped data by correlating the field data, the standardized technical configuration data, and the visualization data for each asset (102a-n). The mapped data uniquely associates the physical properties / operational parameters, technical configurations, and graphical rendering attributes for each asset (102a-n).

As an example, the processing unit of the data processing device correlates operational data from the motors and reactor vessel, technical configuration data from the MTP files provided by the OEMs, and visualization data for rendering the digital representation of the plant. For example, it maps operational parameters such as flow rate or pressure levels to graphical widgets representing "Mot 1," "Mot 2," and "Mot 3" in the AR environment.

At step 408, the processing unit 202 transmits the mapped data of the assets (102a-n) to the visualization device 110 configured to render and display 310 a digital representation of the technical installation 114.

At step 410, the visualization device 110 renders using the rendering module 302 a digital representation of the technical installation 114 at least based on the mapped data. The rendering module 302 receives the mapped data corresponding to an asset (102a-n) to be rendered and identifies the widget corresponding to the asset (102a-n). The rendering module 302 renders the widget and overlays the widget over the image or digital representation of the asset (102a-n).

As an example, the AR visualization device renders a virtual plant environment that includes a graphical representation of the reactor vessel and its associated motors, "Mot 1," "Mot 2," and "Mot 3," using the mapped data sent from the data processing device. For example, each motor is represented with widgets showing real-time operational parameters such as speed, flow rate, and temperature.

At step 412, the visualization device 110 enables displaying of real-time operation and operational parameters of the assets (102a-n) within the digital representation of the technical representation. The operational parameters are dynamically reflected in the visualization to enable continuous monitoring of the technical installation 114.

As an example, the user interacts with the AR visualization device to observe the real-time operational state of the reactor vessel and motors. For instance, if "Mot 1" is pumping fluid to the reactor vessel, the AR device dynamically updates the flow rate and motor speed in the digital representation, enabling continuous monitoring of the reactor section.

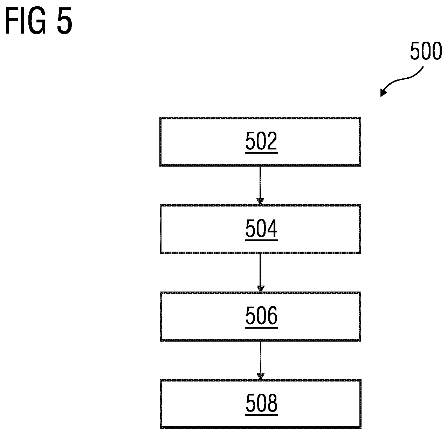

FIG. 5 illustrates a flowchart 500 of step of rendering the digital representation of the technical installation 114, in accordance with an embodiment of the present invention. At step 502, the visualization device 110 captures an image or video of the one or more assets (102a-n) of the technical installation 114. In an example, the visualization device 110 comprises a camera for capturing the image or video of the technical installation 114. As an example, the visualization device 110 may be a (HMI) screen, AR device, or VR device configured to enable visualization of the technical installation 114.

At step 504, the visualization device 110 is configured to identify one or more assets (102a-n) within the captured image using an AI model running an object identification module. The AI model is deployed in a cloud or remote server, wherein the visualization device 110 communicates the image or video with the AI model for identification of the assets (102a-n) in the image or video.

AI model may use techniques like Region-Based Convolutional Neural Networks (R-CNN), including Faster R-CNN and Mask R-CNN, segment images to detect and classify components like motors or pumps. For real-time applications, models such as You Only Look Once (YOLO) and Single Shot MultiBox Detector (SSD) enable rapid asset detection with minimal computation. Vision Transformers (e.g., DETR) leverage self-attention mechanisms for precise identification in complex scenarios, while PointNet handles 3D asset identification using LiDAR data. Lightweight models like MobileNet are optimized for edge devices.

In one embodiment, the training of AI models for asset identification may involve supervised learning techniques, where models are trained on labeled datasets containing images or sensor data of various assets. Inputs for training typically include high-resolution images, 3D point cloud data (e.g., LiDAR), or video streams collected from industrial sites, annotated with bounding boxes, segmentation masks, or class labels to represent asset types and locations. Data augmentation techniques, such as rotation, scaling, and color adjustments, are applied to enhance model robustness against variations in lighting, angles, and occlusions. Transfer learning is often employed by fine-tuning pre-trained models on domain-specific datasets to reduce training time and improve accuracy. Advanced techniques like active learning can further refine the model by iteratively incorporating feedback from challenging or ambiguous cases. These methods ensure the AI models are capable of accurately identifying assets in diverse and dynamic industrial environments.

At step 506, the visualization device 110 retrieves the Human Machine Interface (HMI) facets corresponding to the identified assets (102a-n) from the mapped data received from the data processing device 108. The HMI facets include graphical attributes and operational parameters associated with each identified asset (102a-n).

At step 508, the visualization device 110 dynamically renders widgets corresponding to the identified assets (102a-n) on top of the captured image based on the identified HMI facets. As an example, in the image of asset, multiple widgets such as windows, buttons, icons are rendered by the rendering module 302.

At step 510, the visualization device 110 display 310s the augmented image with the rendered widgets in the display 310 of the device. The widgets display 310 real-time operational parameters of the assets (102an).

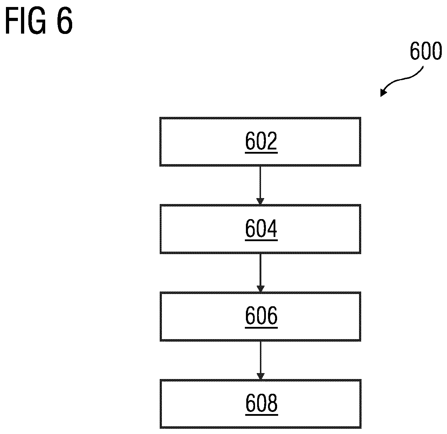

FIG. 6 illustrates a flowchart 600 step of generating mapped data, in accordance with an embodiment of the present invention. At step 602, the processing unit 202 identifies the technical module corresponding to each asset (102a-n) from a library of technical modules.

In an embodiment, the standardized technical configuration data of the assets (102a-n) including communication protocols, communication interfaces, asset (102a-n) type, and runtime interfaces.

In an embodiment, the technical module corresponding to an asset (102a-n) is identified from a library of technical modules based on a unique identifier in the field data representing the technical module associated with the asset (102a-n).

The field data communicated by the field devices 112 and the controller 104 includes a unique identifier corresponding to the asset (102a-n) from which the field data is obtained. This unique identifier is used to identify the asset (102a-n) and the technical module associated with the asset (102a-n). Further, physical properties of the asset (102a-n) are also retrieved based on the identification of the asset (102a-n)using the unique identifier.

A sample data of physical properties corresponding to an asset (102a-n) is provided in the below table.

**Table 1. Physical properties of an asset**

| Attribute | Value |
|---|---|
| ID | W9TF7654HY |
| Description | HAVELLS MHCITES401X1 1500 rvn Three Phase 1.5 hp Four Pole Front Mounted AC Motors |
| Brand | HAVELLS |
| Standard | IS 126152018, IEC 60034 |

A sample data of technical configuration data corresponding to an asset (102a-n) is provided in the below table.

**Table 2. Technical configuration data of an asset**

| Attribute | Value |
|---|---|
| ID | 564e94e2-c501-47ab-8d45. |
| Description | OPCUA Item for MTP Communication |
| Access | Read / Write |
| Narnespace | OPC IJA Namespace |
| TagName | MTPATLO |

At step 604, the processing unit 202 identifies the visualization configuration data corresponding to the asset (102a-n) based on the technical configuration of the asset (102a-n).

A sample data of visualization configuration data corresponding to an asset (102a-n) is provided in the below table.

**Table 3. Visualization configuration data of an asset**

| Attribute | Value |
|---|---|
| ID | WGY76 |
| Display Resolution | 720x480 |
| Platform | Oculus |
| Field of View | 110 degrees |
| Sensors | Vive controller |

At step 606, the processing unit 202 correlates the field data including the physical properties of the assets (102a-n), technical configuration data, and visualization configuration data for each asset (102a-n). The processing unit identifies the field data, technical configuration data, and the visualization configuration data corresponding to each of the assets using a unique identifying code associated with the asset. Further, the identified data are correlated with each other.

At step 608, the processing unit 202 generates the final mapped data for each asset (102a-n) based on the correlated field data, technical configuration data, and visualization configuration data. The mapped data uniquely associates the operational parameters, technical configurations, and graphical rendering attributes for each asset (102a-n).

The following table is an example mapped data for assets (102a-n) in the technical installation 114.

**Table 4. Mapped data of assets (102a-n)**

| **Map Model ID** | **MTP ID** | **Physical ID** | **VR ID** |
|---|---|---|---|
| **DPD01EUSWP07** | 564e94e2-c501-47ab-8d45-e9dfd03ffee6 | M09TF7654HY | MJGY76 |
| **DPD01EUSWP17** | 635g65f5-d589-58ds-7y46-e9dfd03teae9 | PHYUL76RTIO | MJGP09 |
| **DPD01EUSWP37** | 646h67j2-1589-25pe-9t76-e9dfd031ase0 | LOP093FT5621 | MJGP12 |

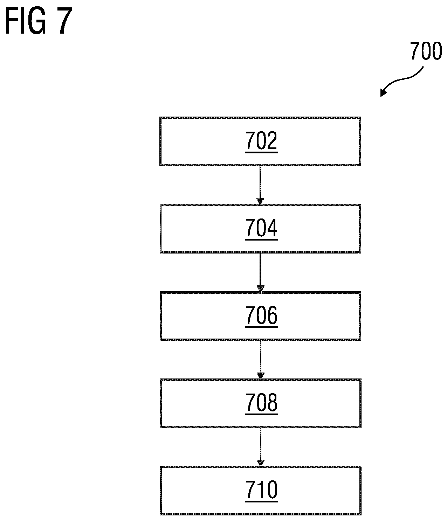

FIG. 7 illustrates a flowchart 700 of a method of using location data for real-time visualization of the technical installation 114, in accordance with an embodiment of the present invention. At step 702, the coordinates of the visualization device 110 are determined using a location sensor 304 mounted on the visualization device 110. Further, all the assets (102a-n) within the visible area of the visualization device 110 are identified by the visualization device 110. The visualization device 110 may utilize the physical properties of the assets (102a-n) to determine the assets (102a-n) that are in proximity to the visualization device 110.

At step 704, the visualization device 110 retrieves the mapped data corresponding to the identified assets (102a-n) from the data processing device 108.

At step 706, the visualization device 110 identifies the HMI facets corresponding to each of the assets (102a-n) based on the mapped data associated with the asset (102a-n).

At step 708, the visualization device 110 renders the digital representation of the assets (102a-n) with the widgets associated with the assets (102a-n) that are within the proximity of the visualization device 110.

At step 710, the visualization device 110 display 310s the operational parameters of the identified assets (102a-n) through widgets, enabling real-time monitoring of assets (102a-n) based on the location of the visualization device 110.

As an example, a user may carry the portable visualization device 110 inside the technical installation 114. The user may further operate the visualization device 110 to look at the assets (102a-n) through the visualization device 110. The visualization device 110 may further identify the assets (102a-n) based on the location of the visualization device 110 and retrieve relevant mapped data from the data processing device 108. Further, the visualization device 110 renders the asset (102a-n) and widgets to display 310 real-time operational parameters of the assets (102a-n).

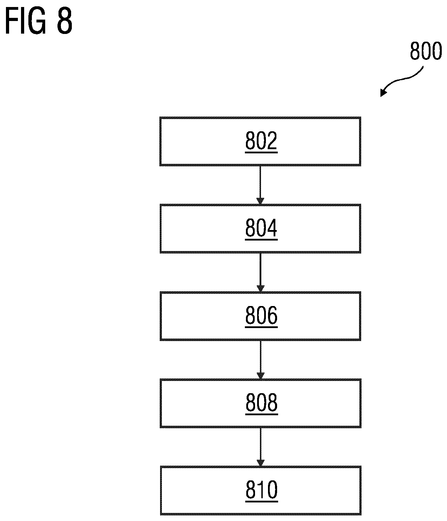

FIG. 8 illustrates a flowchart 800 of a method of changing the operational state of an asset (102a-n) using visualization device 110, in accordance with an embodiment of the present invention.

At step 802, the data processing device 108 receives the modified operational parameter as input from the user through the visualization device 110. In an example, the user uses/operates HMI facets to provide inputs for modifying an operational parameter of an asset (102a-n).

At step 804, the data processing device 108 transmits the modified operational parameter to a controller 104 associated with the corresponding asset (102a-n). The controller 104 may be a PLC configured to control the operating parameters of the asset (102a-n).

At step 806, the controller 104 changes the operational state of the asset (102a-n) based on the modified operational parameter received from the data processing device 108. The controller 104 sets the operational parameter to the received modified operational parameter to change the operational state of the assets (102an).

At step 808, the visualization device 110 displays the updated operational parameter dynamically within the digital representation of the technical installation 114 to provide real-time feedback to the user. The visualization device updates the operational parameters of the assets in real-time based on the field data received from the field devices thereby changes in the operational parameters of the assets are dynamically visualized in real-time.

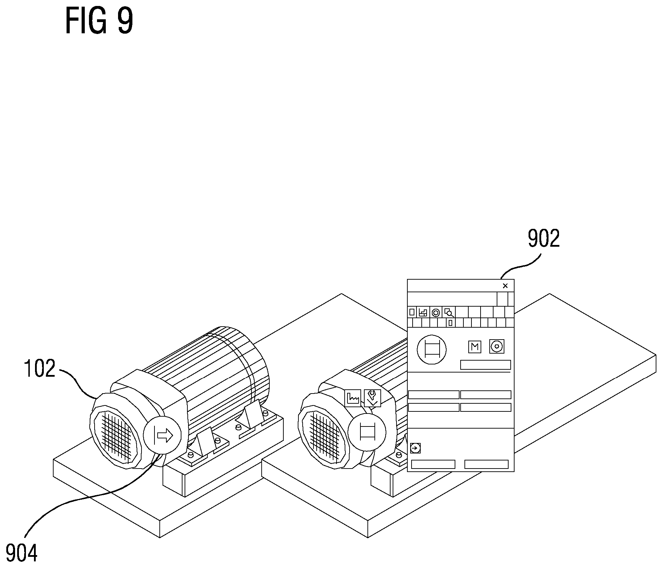

FIG. 9 illustrates a digital representation 900 of the technical installation 114 for real-time visualization of operational parameters of the assets (102a-n), in accordance with an embodiment of the present invention. The digital representation comprises an image of the assets (102a-n), and widgets overlaid over the image of the assets (102a-n). The digital representation is displayed in the display 310 of the visualization device 110, wherein the image of the asset (102a-n) is presented along with the real-time operational parameters of the assets (102a-n).

By leveraging standardized Module Type Packages (MTPs), the invention streamlines asset integration without requiring DCS project downloads. Technical configuration data (e.g., communication protocols, interfaces) is automatically retrieved from MTP libraries, enabling seamless "plug-and-play" functionality. This eliminates inconsistencies in MTP deployment and reduces commissioning complexity.

The visualization device processes data locally using pre-mapped field data, technical configurations, and rendering attributes. This minimizes latency and ensures real-time feedback for critical operations, even in low-connectivity environments. Operators gain immediate insights into asset states without internet or DCS dependencies.

Further, location sensors and AI-driven object identification allow the system to display only relevant assets within the user's proximity. Maintenance teams receive context-aware alerts and parameters via AR overlays, reducing exposure to hazardous areas and enabling safer interactions with operational equipment.

While the invention has been illustrated and described in detail with the help of a preferred embodiment, the invention is not limited to the disclosed examples. Other variations can be deducted by those skilled in the art without leaving the scope of protection of the claimed invention.

### List of references

100 - system for real-time visualization of a technical installation
102a,102b - Asset
104 - Controller
106 - Communication network
108 - Data processing device
110 - Visualization device
112 - Field devices
114 - Technical installation
202 - Processing unit
204 - Memory
206 - Database
208 - Modules
210 - Network interface
212 - Input unit
214 - Output unit
216 - Bus
218 - Field data
220 - Standardized technical configuration data
222 - Visualization configuration data
302 - Rendering module
304 - Location sensor
306 - Widget identifying module
308 - Manager service module
310 - Display
312 - Input module
314 - Output module
400 - flowchart of a method for real-time visualization of a technical installation, in accordance with an embodiment of the present invention
500 - flowchart of step of rendering the digital representation of the technical installation, in accordance with an embodiment of the present invention
600 - flowchart step of generating mapped data, in accordance with an embodiment of the present invention
700 - flowchart 700 of a method of using location data for real-time visualization of the technical installation, in accordance with an embodiment of the present invention
800 - flowchart of a method of changing the operational state of an asset using visualization device, in accordance with an embodiment of the present invention
900 - digital representation of the technical installation for real-time visualization of operational parameters of the assets

## Claims

1. A computer-implemented method for real-time visualization of a technical installation, wherein the method comprises:
receiving, by a processing unit of a data processing device, an input data comprising:
the field data obtained by the field devices, wherein the field data is obtained by a plurality of field devices and the field data relates to at least the operational parameters of the assets;
a standardized technical configuration data of the assets from technical modules corresponding to the assets, wherein the standardized technical configuration data comprises at least an information related to integration of the assets in the technical installation; and
a visualization configuration data of the assets from a visualization device, wherein the visualization configuration data relates to at least the graphical rendering attributes of the assets;
generating, by the processing unit, a mapped data by correlating the field data, the standardized technical configuration data, and the visualization data for each asset, wherein the mapped data uniquely associates the operational parameters, technical configurations, and graphical rendering attributes for each asset;
rendering, by the visualization device using a rendering module, the digital representation of the technical installation at least based on the mapped data received from the data processing device, wherein the digital representation is a digital layout of the technical installation with the assets; and
displaying, in the visualization device, real-time operation and operational parameters of the assets within the digital representation of the technical representation, wherein the operational parameters are dynamically reflected in the digital representation to enable continuous monitoring of the technical installation.

2. The method according to claim 1, wherein rendering the digital representation of the technical installation further comprises:
capturing, by the visualization device, an image of the one or more assets of the technical installation;
identifying, by an AI model using an object identification module, one or more assets within the captured image;
retrieving, by the visualization device, Human Machine Interface (HMI) facets corresponding to the identified assets from the mapped data received from the data processing device, wherein the HMI facets include graphical attributes and operational parameters associated with each identified device;
dynamically rendering, by the visualization device, widgets corresponding to the identified assets on top of the captured image; and
displaying, by the visualization device, the augmented image with the rendered widgets, wherein the widgets display real-time operational parameters of the assets.

3. The method according to any of the preceding claims, wherein generating mapped data comprises:
identifying, by the processing unit, the technical module corresponding to each asset from a library of technical modules;
identifying, by the processing unit, the visualization configuration data corresponding to the asset based on the technical configuration of the asset;
correlating, by the processing unit, the operational parameters, technical configuration data, and visualization configuration data for each asset; and
generating, by the processing unit, the mapped data for each asset based on the correlated field data, technical configuration data, and visualization configuration data.

4. The method according to any of the preceding claims, wherein the method comprises:
receiving, by the data processing device, the modified operational parameter input from the user through the visualization device;
transmitting, by the data processing device, the modified operational parameter to a controller associated with the corresponding asset;
changing, by the controller, the operational state of the asset based on the modified operational parameter received from the data processing device; and
reflecting, by the visualization device, the updated operational parameter dynamically within the digital representation of the technical installation to provide real-time feedback to the user.

5. The method according to any of the preceding claims, wherein the method comprises:
determining, by the visualization device, the coordinates of the visualization device and identifying all assets within the visible area of the visualization device;
retrieving, by the visualization device, the mapped data corresponding to the identified assets from the data processing device;
rendering, by the visualization device, the digital representation of the assets within the proximity of the visualization device;
identifying, by the visualization device, the widgets corresponding to each of the assets based on the mapped data associated with the asset; and
displaying, by the visualization device, the operational parameters of the identified assets through widgets, enabling real-time monitoring of assets.

6. The method according to any of the preceding claims, wherein the technical modules comprise standardized technical configuration of the assets including communication protocols, communication interfaces, asset type, and runtime interfaces.

7. The method according to any of the preceding claims, wherein the technical module corresponding to each asset from a library of the technical modules based on a unique identifier in the field data representing the technical module associated with the asset.

8. The method according to any of the preceding claims, wherein the data processing device is configured to store in a database the data relating to the physical properties of the assets in the technical installation.

9. A data processing device for real-time visualization of a technical installation, wherein the data processing device comprises:
one or more processing units; and
a memory communicatively coupled to the one or more processing units, the memory comprising a module stored in the form of machine-readable instructions executable by the one or more processing units, wherein the module is configured to perform the method steps according to claims 1 to 8.

10. A system for real-time visualization of a technical installation, wherein the system comprises:
a plurality of assets deployed in the technical installation;
one or more controllers connected to the plurality of assets configured to obtain real-time operational parameters of the assets;
a data processing device according to claim 9 configured for real-time visualization of a technical installation; and
a visualization device configured to visually display real-time operational parameters of the assets.

11. A computer program product comprising machine-readable instructions stored therein that, when executed by one or more processing units, cause the one or more processing unit to perform a method according to any of the claims 1-8.
